# EUROPÄISCHE PATENTSCHRIFT

(11) **EP 1 259 106 B1**
(45) Veröffentlichungstag und Bekanntmachung des Hinweises auf die Patenterteilung: **15.02.2006**
(21) Anmeldenummer: 01908031.6
(22) Anmeldetag: 25.02.2001
(51) Int. Cl.: A01D 34/71

(54) **RASENTRIMMER**
LAWN TRIMMER
DEBROUSSAILLEUSE

(30) Priorität: 25.02.2000 CH 367002000
(43) Veröffentlichungstag der Anmeldung: 27.11.2002
(73) Patentinhaber: POSCH, Leopold, 3200 Obergrafendorf (AT)
(72) Erfinder: POSCH, Leopold, A-3200 Obergrafendorf (AT); HILGARTH, Günter, 91578 Leutershausen (DE)
(74) Vertreter: Rosenich, Paul
(86) Internationale Anmeldenummer: PCT/IB2001/000249
(87) Internationale Veröffentlichungsnummer: WO 2001/062094

(56) Entgegenhaltungen:
- DE-A- 1 945 070
- DE-U- 29 913 423
- US-A- 2 663 984
- US-A- 2 734 327
- US-A- 3 134 213
- US-A- 3 802 171
- US-A- 4 158 279

## Beschreibung

In dieser Patentanmeldung geht es darum, Rasentrimmer so zu verbessern, so dass sie einerseits effizient arbeiten, andererseits ein geringeres Sicherheitsrisiko bergen. Zudem sollten Sie effizienter arbeiten als bisherige Systeme. Dabei sollte - ohne Bedienungskomfortverlust - die Anzahl der Bauelemente auf ein Minimum beschränkt werden. Rasentrimmer im Sinne der Erfindung umfassen auch Motorsensen o.dgl. Rasentrimmer weisen im Vergleich mit Rasenmähern Bauunterschiede auf. Es ist allgemein üblich, dass die Schneidmesser von beispielsweise aus den US-A-2777271 und 5020309 ersichtlichen Rasenmähern gleichzeitig eine Luftströmungswirkung erzeugen, um das geschnittene Gras in und durch einen Luftkanal zu befördern. Das geschnittene Gras wird dadurch meistens gleichmässig über die Rasenfläche verteilt. Es kann aber auch in einem Grassammelbehälter gesammelt und kompostiert oder weiter zerkleinert und dem Rasen später wieder zugeführt werden (sog. mulchen).

Unter der US-A-4827702 ist ein Rasentrimmer bekannt gemacht worden, der - wie die meisten, beispielsweise aus den US-A-4227280 / 4453372 / 4642976 und 4756147 ersichtlichen Rasentrimmer - einen Schneidefaden aufweist. Um die Rotationsachse des Schneidefadens konzentrisch angeordnet sind Ventilatorblätter, die - ähnlich den Rasenmäher-Schneidmessern - einen Luftstrom erzeugen, um das geschnittene Gras aus dem Schneidebereich zu befördern. Ein Luftkanal ist bei diesem Aufbau nicht vorgesehen.

Ein Rasentrimmer mit Luftkanal und zwei Schneideinrichtungen ist in der DE-U-29913423 veröffentlicht worden. Dieser verfügt in einer Ausführungsform vorne und hinten je eine Abstützrolle. Die vordere Abstützrolle ist dabei insofern nachteilig, als sie verhindert, dass der Rasentrimmer mit seiner Schneideinrichtung optimal nahe an Mauern oder dgl. herangeführt werden kann. - In einer anderen Ausführungsform ist hingegen ein Aufbau vorgeschlagen, bei dem vorne keine Rolle angeordnet ist. Die Abstützung gegenüber dem Boden beschränkt sich dabei auf die hintere Rolle und eine Deckscheibe unterhalb des Schneidfadens. Ohne nähere konstruktive Angaben ist ausserdem geoffenbart, dass diese Deckscheibe durch ein Rad ersetzt werden könnte. - Diese Offenbarung gibt einem Anwender jedoch keine Lehre, wie ein solches Rad denn mit den rotierenden Schneidfadenkörper verbunden sein könnte.

Weiterhin sind Rasentrimmer bekannt, bei denen aus Sicherheitsgründen die Schneideinrichtung nachgiebig ausgebildet ist. Die rotierenden Schneidmesser sind dort so ausgebildet oder gelagert, dass sie bei einem bestimmten Schneidewiderstand wegklappen, abbrechen (Kunststoff) oder sich verbiegen (Schneidefaden).

Vom Anmelder wurde ein Rasenmäher geschaffen und veröffentlicht(WO-A-93/11659), bei dem ein rotierendes Messer so gestaltet ist, dass es neben dem Schneiden der Grashalme auch noch einen starken Saugluftstrom erzeugt, mit dem die Grashalme in den Schneidbereich gesaugt werden. Dabei werden sie so einerseits in den Schneidbereich des Messers gezogen und andererseits, nachdem sie abgeschnitten wurden, ins Innere des Rasenmähers transportiert, von wo aus sie dann in einem Grassammelbehälter gesammelt werden.

In einer Weiterentwicklung hat der Anmelder einen ähnlich arbeitenden Rasentrimmer entwickelt und veröffentlicht (WO-A-95/08255). Ein Trimmer für kleinere Rasenflächen mit vergleichbarem Aufbau zu diesem bekannten Rasentrimmer des Anmelders wird erfindungsgemäss durch verschiedene Verbesserungsschritte verbessert.

In der wähnten DE-U-29913423 wird auch auf eine bevorzugte Verjüngung im Eintritts-Öffnungsbereich hingewiesen. Durch eine Weiterbildung dieser Verjüngung sollen im Rahmen der vorliegenden Erfindung Verbesserungen gefunden werden.

In einem ersten Verbesserungsschritt erhöht die vorliegende Erfindung die Effizienz beim Abtransport und auch beim Ansaugen von Grashalmen im Randbereich des Rasentrimmers. Dies geschieht dadurch, dass die Verjüngung der Ansaugöffnung im unteren Bereich der Ansaugöffnung des Rasentrimmers - in Gebrauchslage - neben dem den Luftstrom erzeugenden Schneidwerkzeug oder unmittelbar darunter vorgesehen ist, so dass Luftströmungen hinter der Schneidevorrichtung, die auch den Saugluftstrom erzeugt, davon abgehalten werden, wieder nach aussen, in Richtung Erdboden, zu entweichen.

Durch diese Massnahme wird dabei gegenüber dem Bekannten nicht nur die Luftführung und Saugwirkung verbessert, sondern gleichzeitig auch die Betriebssicherheit erhöht und Verletzungsgefahr reduziert, da die peripheren Enden des Schneidewerkzeuges so etwas abgedeckt bzw. geschützt sind und man daran gehindert ist, bei rotierendem Ventilator-schneidmesser und abmontiertem Fadenschneider hinter die Verjüngung zu greifen, wie es z.B. beim Aufbau gemäss DE-U-29913423 noch möglich wäre.

Dies betrifft nicht nur die Verletzungsgefahr für Anwender sowie die in dessen Umgebung anwesenden Personen, sondern auch die Gefahr des Einklemmens von harten Gegenständen, wie z.B. Tannenzapfen o.dgl. zwischen dem Schneidwerkzeug und dem Rand der Eintrittsöffnung. Ein solches Einklemmen könnte nämlich zu einem Blockieren der Schneidfunktion und damit zu einer Belastung von Motor und Gehäuse führten. Durch diesen ersten erfindungsgemässen Schritt, der auch unabhängig von den noch nachfolgend beschriebenen weiteren Schritten mit Vorteil eingesetzt werden kann, wird somit auch die Betriebssicherheit erhöht und die Störungsanfälligeit reduziert. Abgesehen vom obigen verbessert dieser erfindungsgemässe erste Schritt auch die Aufnahmekapazität für Laub und dgl., so dass der erfindungsgemässe Trimmer optimal auch als Laubsauger verwendet werden kann.

Bei einer erfindungsgemäss möglichen Umkehrung der Drehrichtung des Schneidewerkzeuges funktioniert dieses als Blasegerät und kann so beispielsweise zum Freiblasen von laubbedeckten Flächen o.dgl. benutzt werden. Auch für diese Anwendungsart ist die angegebene Verjüngung mit Vorteil neben dem Ventilator-Schneidmesser oder unmittelbar darunter angeordnet. Ein neues unabhängig anwendbares Blasrohr ist in Anspruch 18 angegeben.

Die Betriebssicherheit und Grasmäheffizienz des Gerätes kann -wie schon bekannt- dadurch noch gesteigert werden, dass zusätzlich zum Schneidwerkzeug ein weiteres Schneidwerkzeug vorgesehen wird (zweiter Schritt), das im Unterschied zum ersten, das auch den starken Saugluftstrom erzeugt, "weich" oder nachgiebig ausgebildet ist, also z.B. aus wenigstens einem klappbaren Messer aus einem festen Werkstoff, wie z.B. Stahl, Aluminium, Kunststoff o.dgl. besteht. Ist es aus festen Werkstoffen hergestellt, können die Schneidemesser vergleichbar den oben angegebenen auch so ausgebildet sein, dass sie zur Saugluftwirkung beitragen.

Bevorzugt besteht dieses weitere Schneidwerkzeug jedoch aus wenigstens einem Trimmfaden. Bei diesem Aufbau könnte der Trimmfaden das Gehäuse des Trimmers auch radial seitlich überragen. In der Regel wird er jedoch im Inneren des Gehäuses laufen, um das Wegschleudern von Gras, Steinen und Erde zu vermeiden.
Durch die Fliehkraft des Fadens wird im wesentlichen verhindert, dass sich dieser im Saugluftstrom zu stark verbiegen kann. Bei besonders starken Saugluftströmen könnten, gemäss einer neuen besonderen Ausbildung der Erfindung, anstelle eines Fadens auch vorgebogene Schneiddrähte o.dgl. vorgesehen sein, die sich erst durch die Saugwirkung gegen die Fliehkraft in eine zum Saugluftstrom senkrecht stehende Lage verbiegen. Diese Anmerkung gilt auch für die Ausbildungen gemäss dem fünften Erfindungsschritt.

Durch diesen neuen Aufbau kommt es zudem zum Effekt des weiteren Zerkleinerns des durch das zweite Schneidwerkzeug geschnittenen Grases durch die Messer der ersten Schneideinrichtung im Inneren des Trimmergehäuses. Dieser Effekt bringt zudem den Vorteil, dass der Grassammelbehälter mehr Gras aufnehmen kann, bzw. dass im Falle des späteren Mulchens ein zusätzlicher Vorgang des Zerkleinerns entfallen kann.

Bevorzugt kann das zweite und/oder das erste Schneidwerkzeug auch demontierbar ausgebildet sein, so dass der Trimmer auch mit nur einem Schneidwerkzeug, mit oder ohne Saugwirkung, betrieben werden kann.

Ist das zweite Schneidwerkzeug demontierbar, so kann nach seiner Demontage der Trimmer auch als normaler Saug-Trimmer, wie z.B. in der WO-A-95/08255 angegeben, eingesetzt werden; wenn beispielsweise Gras zu hoch gewachsen ist und mit der zweiten Schneideinrichtung nicht mehr gleichmässig gekürzt werden kann.

In einem dritten Schritt geht es um die weitere Verbesserung der Betriebssicherheit bei gleichzeitiger Erhöhung der Benutzerfreundlichkeit. Auch dieser Schritt ist an sich neu, erfinderisch und unabhängig von den vorgängigen und nachfolgenden Schritten anwendbar. Dabei geht es um die Schaffung einer neuartigen Abstützeinrichtung für den Rasentrimmer, um ihn in einem geeigneten, konstanten Abstand zum Boden verschieben zu können. Diese neuartige Abstützeinrichtung soll insbesondere direkt dort wirken, wo der Hauptanteil des Eigengewichts des Trimmers auftritt. Dieser Bereich liegt etwa unterhalb der Motorachse. Dies deshalb, weil in diesem Bereich einerseits das Eigengewicht des Motors, der Schneideinrichtungen und des Gehäuses wirken und sich somit der Schwerpunkt des gesamten Gerätes (ohne Grasfangsack) dort befindet. Bedingt durch die Saugwirkung des Trimmers entsteht zudem eine zusätzliche Kraftkomponente die den Trimmer parallel zur Motorachse gegen den Erdboden zieht.

Es gibt eine Vielzahl von motorisch betriebenen Trimmern, insbesondere Fadentrimmern, die über eine kugelkalottenförmige Kunststofffläche gegenüber dem Boden abstützbar sind. Auch die DE-U-29913423 bietet eine solche Lösung als Variante an. Diese Fläche ist Teil der Fadenhalterung bzw. des Reservefaden-Behälters. Bei allen diesen Aufbauten ist es jedoch nachteilig, dass diese Abstützfläche rotiert, d.h., dass vom Drehmoment des Antriebes eine Kraft auf den Boden ausgeübt wird, der einerseits ein Sicherheitsrisiko für den Anwender darstellt, da diese Kraft u.U. geeignet ist, den Trimmer ungewollt in eine bestimmte Richtung abzulenken. Andererseits führt diese schleifende Rotationsbewegung u.U. zu einer Beeinträchtigung von besonders empfindlichen Rasennarben, wie beispielsweise auf Golfplätzen o.dgl. Abgesehen davon wird durch diese schleifende Rotation die Motorkraft des Trimmerantriebes gebremst, was zu Energieverlusten und verminderter Schneid- und Saugleistung führen kann.

Bei diesem erfindungsgemässen dritten Schritt wird in Achsrichtung etwa unterhalb der Drehachse des bzw. der Schneidwerkzeuge eine Abstützfläche vorgesehen, die drehentkoppelt ist von der Drehachse des bzw. der Schneidwerkzeuge. Dadurch entsteht eine erfindungsgemässe Drehentkoppelung und eine ruhende Abstützeinrichtung. Eine Drehentkoppelung erfolgt beispielsweise durch ein Lager zwischen der Motorwelle und der Abstützeinrichtung oder durch die Anordnung eines Verbindungsstücks zwischen dem Trimmergehäuse und dem Bereich unter dem Messer. *(siehe Beschreibung 4. Schritt).*

Eine solche Abstützeinrichtung kann beispielsweise mit einer noch weiter nach hinten reichenden Abstützeinrichtung, wie z.B. in der WO-A-95/08255 dargestellt, zusammenwirken, so dass der Trimmer an wenigstens zwei Abstützpunkten oder an einer länglichen Abstützfläche auf dem Boden abgestützt werden kann. Ein derartiger Aufbau ermöglicht neben der sicheren Bedienführung im Betrieb auch das bequeme Abstellen des Trimmers nach dem Betrieb.

Diese Effekte werden auch bei einer Variante der neuartigen Abstützeinrichtung erreicht, bei der unmittelbar unter der Drehachse des bzw. der Schneidwerkzeuge eine drehentkoppelte Stützfläche vorgesehen ist, die sich an der Drehachse abstützt. Eine solche Drehentkoppelung kann beispielsweise durch ein Wälzlager erreicht werden.

Eine Variante kann erfindungsgemäss auch dadurch erreicht werden, dass die Abstützeinrichtung ein verlängerter Teil des Trimmergehäuses ist, der insbesondere von hinten, d.h. von der Seite des Trimmergehäuses, das in Betriebslage dem Bediener zugewandt ist, nach vorn, bis etwa unter die Drehachse des bzw. der Schneidwerkzeuge reicht. Durch die erfindungsgemässe neue Abstützeinrichtung wird auch die Betriebssicherheit erhöht, indem sie - vor allem zusammen mit einer weiteren, hinteren Abstützeinrichtung eine stets gleichförmige Schrägstellung des bzw. der Schneidwerkzeuge zum Erdboden bewirkt.

In einem ähnlichen aber alternativen vierten Schritt sieht die Erfindung vor, ein Trimmergehäuse anzubieten, das mit seinem unteren Rand unterhalb des Schneidwerkzeuges ragt, wobei die Drehachse des Schneidwerkzeuges darauf nicht oder über ein Lager abgestützt ist. Durch diesen vierten alternativen Aufbau ohne drehentkoppelter Abstützung an der Motorwelle ist, wie beim dritten Aufbau die Abstützung des Trimmers verbessert. Er unterscheidet sich dabei vom Aufbau gemäss US-4827702, bei dem ein abnehmbarer Propeller auf einem an seinem Umfang mit einem Trimmerfaden versehenen, drehbar gelagerten Rotor angeordnet ist. Dieser bekannte Aufbau weist kein Gehäuse im Sinne der Erfindung auf. Der Propeller ist auch nicht als Schneidwerkzeug ausgebildet, sondern ausschliesslich zur Erzeugung eines Luftstromes, der das durch den Faden abgeschnittene Gras seitlich wegbläst. Die Betriebssicherheit bei diesem bekannten Aufbau ist gering und eine Verletzungsgefahr erheblich. Auch könnten abgeschnittene Grashalme teilweise nicht abtransportiert und im oder am Gerät gesammelt werden.

Es erübrigt sich zu betonen, dass diese beiden obengenannten, neuartigen Abstützeinrichtungen auch bei herkömmlichen Rasentrimmern mit Vorteil und unabhängig von den anderen hier erwähnten Schritten einsetzbar sind.

Als besondere Weiterbildung des dritten oder vierten Schrittes ist die an sich bekannte Abstützeinrichtung mit einer Stützrolle o.dgl. versehen, so dass beim Verschieben des Trimmers der Reibungswiderstand gegenüber dem Erdboden gering gehalten ist.

Ausbildungen gemäss dem ersten, zweiten und fünften Schritt können aber auch ohne die Abstützung gemäss den Schritten drei und vier, jedoch mit einer herkömmlichen, mitschleifenden kugelkalottenförmig ausgebildeten Abstützung versehen sein, wie per se schon in der DE-U-29913423 angegeben wurde.

In einem unabhängig durchführbaren fünften Schritt wird die Sicherheit insofern erhöht, als auf die erste Schneideinrichtung mit den propellerförmigen Messern gänzlich verzichtet wird. Zur Saugluftstromerzeugung wird das Prinzip eines herkömmlichen Laubsaugers verwendet, der am Ende eines relativ langen Saugrohres ein Luftschaufelrad aufweist und mit diesem einen Saugluftstrom erzeugt, der Laub o.dgl. durch das Saugrohr ansaugt und durch ein Ausblasrohr in einen Sammelsack bläst. Eine Verletzungsgefahr durch das Luftschaufelrad ist praktisch ausgeschlossen, da dieses in einem relativ grossen Abstand von der Lufteintrittsöffnung entfernt im Inneren des Saugrohres angeordnet ist.

Für das Grasschneiden ist erfindungsgemäss im Bereich der Eintrittsöffnung des Saugrohres eine herkömmliche Freischneide-Einrichtung bzw. ein Trimmer-Schneidwerkzeug wie z.B. ein rotierender Schneidfaden oder ein wegklappbares Messer o.dgl. - im Sinne der "zweiten Schneidvorrichtung" wie z.B. unter dem zweiten Schritt angegeben - angeordnet. Diese Grasschneide-Vorrichtung kann bei Bedarf auch entfernbar ausgebildet sein, so dass diese erfindungsgemässe neue Vorrichtung als reines Laubsaugegerät, als Luftblasegerät oder als Rasentrimmer mit Absaugvorrichtung eingesetzt werden kann. Selbstverständlich erlaubt dieser Aufbau auch noch den Zustand ohne Saugwirkung, d.h. mit abgeschaltetem Luftschaufelrad. Dann arbeitet dieser neue Aufbau wie ein herkömmlicher Rasentrimmer ohne Saugwirkung.

Ein ähnlicher Aufbau jedoch für einen anderen Anwendungszweck, nämlich für das grossmotorische - fahrzeuggestützte Gras- und Heckenschneiden an Strassenböschungen etc. ist in der WO-A-93/11569 des Anmelders auf Seite 5 (letzter Absatz) und Seite 6 (erster Absatz) angegeben. Dort handelt es sich jedoch nicht um ein Laubsaugegerät mit einer Schneideinrichtung für das Rasentrimmen, sondern um einen beweglichen flexiblen Saugrüssel, der fahrzeuggestützt von einer starken Saugeinrichtung für das Absaugen von Mähgut von grossen sog. Schlegelmähwerken o.dgl. verwendet wird.

Im Falle seiner Weiterbildung gemäss der erwähnten WO-A-93/11569 weist der Saugrüssel jedoch ein innenlaufendes, ventilatormässig wirkendes Schneidmesser auf, das fliegend gelagert ist und so mittels des Saugluftstromes aus dem Saugrüssel in Rotations- bzw. Schneidebewegung gesetzt wird. Das Messer dient dabei auch als Häckseleinrichtung, wenn der Saugrüssel als Laubsauger benutzt wird.

Am Eintritt eines solchen Saugrüssels einen Rasentrimmer anzuflanschen wäre nach gängiger Fachmeinung weder sinnvoll noch naheliegend. Umgekehrt lag es den Fachleuten bis heute offensichtlich nicht nahe, an einen herkömmlichen Rasentrimmer einen solchen überdimensionierten Saugrüssel anzuflanschen. Daher ist der durch den fünften Erfindungsschritt erzielte Effekt ein überraschender und das durch ihn neu geschaffene Gerät besonders universell einsetzbar.

Gemäss einer besonderen Ausgestaltung der erfindungsgemässen Laubsaugeinrichtung mit Schneideinrichtung, ist letztere über eine - gegebenenfalls flexible - Welle mit dem Luftschaufelrad bzw. mit dessen Antrieb verbunden, so dass ein einziger Antrieb beide Funktionen (Schneiden und Saugen) ermöglicht. Alternativ kann auch ein separater Elektromotor o.dgl. für den Antrieb des Vorschneidwerkzeuges vorgesehen sein. So liegt im Rahmen der Erfindung auch der Aufbau eines Saugtrimmers mit Ventilator-Schneidblättern und einer zusätzlichen Saugeinrichtung im angeschlossenen Saug-, bzw. Ausblasrohr.

Im Zusammenhang mit allen Erfindungsvarianten, bei denen das Saugen und Blasen eine wichtige Rolle spielt, ist gemäss einer besonderen Ausgestaltung auch vorgesehen, dass durch Drehrichtungsumkehr des Antriebes für den die Luftströmung erzeugenden Bauteil, die Saug/Blasrichtung umgedreht werden kann. Am einfachsten geschieht dies durch einen geeigneten Elektromotor mit einem elektromechanischen oder elektronischen Umschalter. Kompliziertere Massnahmen, wie sie bisher z.B. bei Laubsaugegeräten (Abmontieren eines Saugrohres und Anbau desselben an der Ausblasöffnung usw.) üblich waren, entfallen dadurch.

Details und Varianten der obigen Erfindungsschritte sind in den abhängigen Ansprüchen angegeben. Die Schritte 2 bis 5 sind ebenso in abhängigen Ansprüchen dargestellt, jedoch könnten sie, wie schon erwähnt, auch unabhängig eingesetzt werden.

Als besondere Ausführungsform für alle Trimmergehäuse mit Saugluftwirkung ist als besondere Ausbildung noch ein schneckenförmiges Gehäuse realisiert, das bei Bedarf den linearen Ansaugluftstrom optimal in einen Grassammelbehälter bzw. in eine Auswurföffnung umlenkt.

Werden Varianten der Erfindung mit einer oder mehreren Laufrollen ausgestattet (im hinteren Bereich, im vorderen Bereich, oder unterhalb der Drehachse der Schneidwerkzeuge), wobei der äussere Abstand der Laufrollen oder Räder kleiner oder gleich dem Aussendurchmesser des Gehäuses des Trimmers ist, dann kann der Trimmer vorteilhaft parallel zu einer Mauer bzw. Einfassung eines Rasens geführt werden, wobei der Rasen bis zur Mauer bzw. bis an die Einfassung heran geschnitten wird. Wenn hingegen nur eine Laufrolle am hinteren Bereich des Gehäuses angebracht ist, kann der Trimmer weiterhin so betrieben werden, dass er auf eine Mauer oder Einfassungen zugeschoben wird, wobei das Gras ebenfalls bis an den Rand erfasst und geschnitten werden kann.

Als vorteilhaft hat sich herausgestellt, wenn der freie Schneidebereich an der Eintrittsöffnung des Trimmergehäuses kreisringförmig oder sichelförmig ist. Sichelförmig vor allem dann, wenn der Trimmer - z.B. über eine Brückenkonstruktion - von hinten unter der Drehachse der Schneidwerkzeuge abgestützt ist, wie im dritten Erfindungsschritt vorgeschlagen.

Die Breite des Kreisringes bzw. der Sichel ist dabei vorzugsweise beschränkt auf etwa 1-6 cm, vorzugsweise 2-4cm, insbesondere ca. 3,5cm. Dadurch ergibt sich eine gute Luftansaugströmung, ein sicherer Schnitt durch das innere erste Schneidwerkzeug und eine Reduktion der Verletzungsgefahr und Blockadegefahr, da nur relativ schmale Gegenstände in das Gerät eindringen können. Ein Fuss kann damit vom Schneidwerkzeug nicht erfasst werden.

Wie beim bekannten Gerät des Anmelders kann am Abluftkanal des Trimmers ein Fangbehälter befestigt sein, um Gras oder Laub zu sammeln. Im Falle von Laub und einer Ausbildung nach einem der ersten 4 Schritte, wird dieses vorteilhafterweise durch das erste Schneidwerkzeug noch zerkleinert, bevor es in den Behälter gelangt.

Gemäss einer Weiterbildung der Erfindung ist zwischen dem Ausblasstutzen des Schneidwerkzeuges im unmittelbaren Anschluss an das Ventilator-Schneidmesser ein Transportrohr angeordnet, das die Verbindung zu einem Fangsack für das abgeschnittene Gras herstellt. Gemäss einer weiteren besonderen Weiterbildung nach einem sechsten Schritt dieser Erfindung verfügt das Transportrohr oder der Anschlussstutzen über eine umschaltbare Klappe oder dgl. mit der der Saugluftstrom, bzw. Ausblasluftstrom wahlweise in das Transportrohr, bzw. in den Fangsack oder alternativ ins Freie gelenkt wird.

Diese bevorzugte Ausgestaltung hilft einem Anwender, selektiv die von ihm behandelten Rasenstücke vom Schnittgut zu säubern oder das Schnittgut unmittelbar in die Landschaft zu bringen. Am Rande von Büschen oder dgl. ist letzteres bevorzugt, da sich daraus auch ein Düngeeffekt für die Büsche oder dgl.ergeben kann. Zur Verbesserung der Zuführeigenschaft des Rasentrimmers kann in einem siebten erfinderischen Schritt, der ebenso auch unabhängig von den übrigen Schritten eins bis sechs angewendet werden kann, eine rotierende Zuführeinrichtung vorgesehen sein, welche die Grashalme erfasst und in den Schneidbereich der Schneideinrichtung, z.B. des Ventilatormessers und/oder der zweiten Schneideinrichtung zieht, bzw. schiebt. Dadurch kann auch mit einer geringeren oder sogar ohne Saugwirkung (daher auch ohne besondere Querschnittsverjüngung) wirkungsvoll Gras in den Schnittbereich gebracht werden. Bevorzugt läuft diese Fangvorrichtung gegenläufig zur Rotationsrichtung des Ventilatormessers und mit einer wesentlich geringeren Drehzahl. Gemäss einer besonderen Ausgestaltung dieser Erfindung wird das Antriebsdrehmoment für diese Fangvorrichtung vom selben Antrieb erzeugt wie das Drehmoment für das Venilatormesser. Gemäss einer besonderen Ausgestaltung kann dies durch ein Untersetzungsgetriebe erfolgen, das vorzugsweise als Planetengetriebe ausgebildet ist. Zur Unterstützung der Fangwirkung durch die Fangvorrichtung kann am äusseren Gehäuse eine zinken- oder kammförmige Positioniervorrichtung für Grashalme vorgesehen sein, die verhindert, dass Grashalme unter Krafteinwirkung der Fangvorrichtung entlang des Trimmergehäuses abgleiten können. Insbesondere der siebte Schritt dient auch zu einer Verbesserung der Schneideleistung und zu einer Erhöhung der Betriebssicherheit, da durch die langsam drehenden und an sich ungefährliche Zuführvorrichtung ein Anwender davon abgehalten wird, in den gefährlichen Schneidbereich des Trimmers zu greifen.

Weitere Verbesserungen und erfindungsgemässe Details ergeben sich aus den Zeichnungen, die erfindungsgemässe, symbolische Ausführungsbeispiele darstellen.

Nicht dargestellt, aber im Rahmen der Erfindung liegend, sind gegebenenfalls motorisch angetriebene Räder oder Rollen für den Vorschub des Rasentrimmers. Solche Antriebe können über Getriebe von der Motorwelle des Rotationsantriebes für die Schneidwerkzeuge abgegriffen werden. Selbstverständlich können auch alle angegebenen Antriebe durch einen Motorsensen-Antrieb über eine Welle bewerkstelligt sein.
Es zeigen dabei:
- Fig. 1: eine Ansicht von unten auf ein erfindungsgemässes Rasentrimmgerät, mit einer Graszuführvorrichtung mit abgenommener Abdeckung,
- Fig. 2: eine Variante des in Fig. 1 dargestellten Gerätes mit einer Abstützkufe unterhalb der Motorwelle,
- Fig. 3: eine weitere Variante der in den Fig. 1 und 2 dargestellten Geräte mit einer drehentkoppelten Rolle als Abstützeinrichtung unterhalb der Motorwelle,
- Fig. 4: eine Ansicht des in Fig. 2 dargestellten Gerätes von unten, teilweise geschnitten,
- Fig. 5: eine Ansicht des in Fig. 6 dargestellten Gerätes von unten,
- Fig. 6: eine weitere Variante der in den Fig. 1 bis 4 dargestellten Geräte mit einer gehäusegestützten Rolle unterhalb der Motorwelle,
- Fig. 7: einen symbolischen Teilausschnitt durch eines der in den Fig. 1 bis 6 dargestellten Geräte mit einer Gehäuseverjüngung,
- Fig. 8: einen Teilausschnitt einer weiteren Variante der Ausführung gemäss Fig. 7,
- Fig. 9: einen Teilausschnitt einer weiteren Variante der Ausführung gemäss Fig. 7,
- Fig. 10: einen Teilausschnitt einer weiteren, nicht in den Schutzbereich der Ansprüche fallenden, Variante der Ausführung gemäss Fig. 7,
- Fig. 11: ein Symbolbild eines beispielsweise als Laubsauger einsetzbaren Gerätes mit langem Saugrohr und separaten Antrieben für Sauggebläse und Schneidwerkzeug, im Längsschnitt,
- Fig. 12: eine Variante nach Fig. 11 mit gekuppeltem Drehantrieb und Radialgebläse, im Längsschnitt,
- Fig. 13: eine Variante eines erfindungsgemässen Gerätes, mit als oszillierender Mähbalken ausgebildeter Vorschneidvorrichtung und
- Fig. 14: einen Aufbau mit Transportrohr und wahlweise bedienbarer Ausblasklappe.

Die Figuren sind zum Teil übergreifen beschrieben. Gleiche Bauteile tragen gleiche Bezugszeichen. Funktionsähnliche Bauteile haben gleiche Bezugszeichen mit unterschiedlichen Indizes.

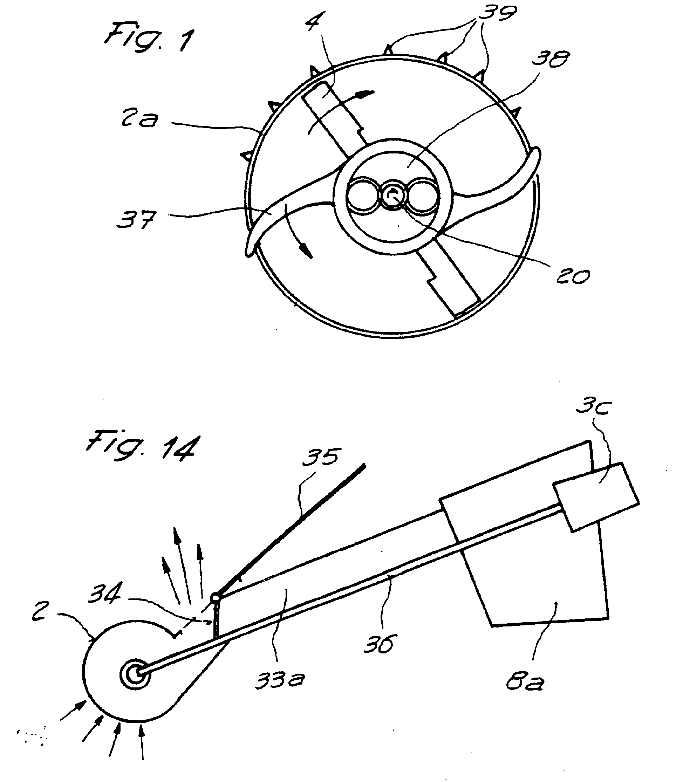

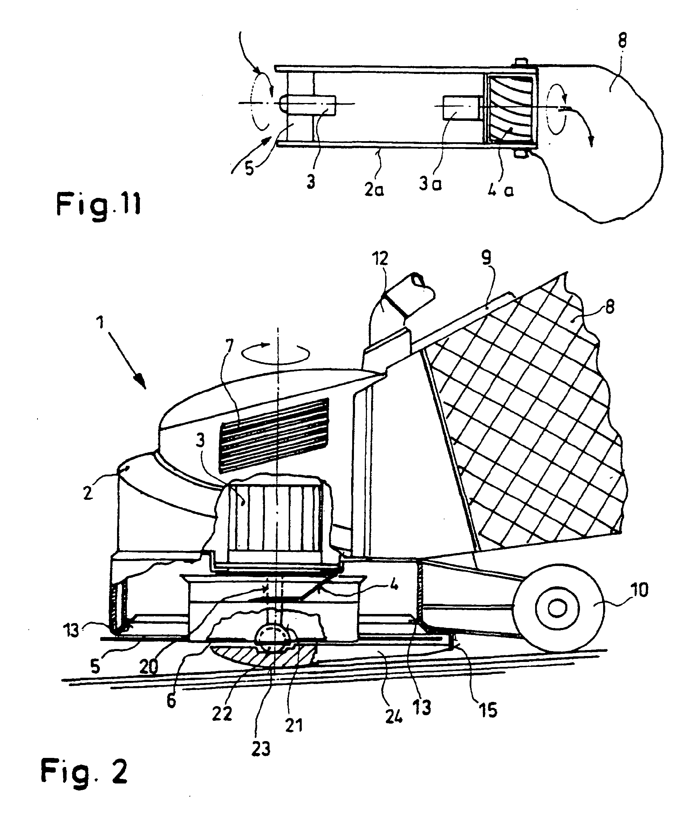

Die aus den Fig. 2 bis 6 ersichtlichen Geräte weisen ein insgesamt mit 1 bezeichnetes Gehäuse mit einem Grasführungskanal 2 und einen im Gehäuse 1 gelagerten Antriebsmotor 3 auf. Auf der Motorwelle des Antriebsmotors 3 ist eine erste Schneideinrichtung 4 angeordnet. Die Schneideinrichtung 4 ist vorzugsweise so ausgebildet, dass sie neben der Schneidwirkung gleichzeitig auch einen Luftstrom erzeugen kann. Dies kann beispielsweise durch einen Anstellwinkel der die Schneideinrichtung bildenden Schneidmesser erreicht werden.

Im normalen Betrieb erzeugt die Schneideinrichtung 4 einen Luftstrom, der sich in einer Saug-Strömungsrichtung vom Boden her axial durch die Schneideinrichtung 4 bewegt. Bei einigen Ausführungsvarianten ist der Schneideinrichtung 4 entgegen der Saug-Strömungsrichtung eine - gegebenenfalls demontierbare- Vorschneideinrichtung 5 vorgelagert. Die Vorschneideinrichtung 5 dient bei diesen Ausführungsformen dem Abschneiden des Grases. Anschliessend wird das abgeschnittene Gras durch die Luftströmung zur Schneideinrichtung 4 befördert, wo es zerkleinert wird.

Die Vorschneideinrichtung 5 weist einen Tragkörper 6 auf. Dieser Tragkörper 6 kann beispielsweise im wesentlichen trommelförmig ausgebildet und mit an seinem Umfang angeordneten Schneidflügeln versehen sein.

Seitlich am Gehäuse 1 sind Lüftungsschlitze 7 vorgesehen, durch die der Luftstrom unter Kühlung des Antriebsmotors wenigstens teilweise wieder aus dem Gerät austreten kann. Das abgeschnittene und zerkleinerte Gras gelangt mittels des Luftstromes durch den Grasführungskanal 2 in einen porösen Grasfangsack 8. Der Grasfangsack 8 weist beispielsweise an seiner Oberseite eine Klappe 9 zur Entnahme des zerkleinerten Grases auf.

Zur Abstützung des Gerätes ist eine Laufrolle 10 vorgesehen, welche gegebenenfalls über einen Riemen vom Antriebsmotor 3 angetrieben wird.

Bei der in Fig. 1 des DE-U-29913423 dargestellten Ausführung ist das Hauptgewicht des Gerätes über eine kugelkalotten-, bzw. tellerförmig ausgebildete Konsole 11 auf dem Boden abstützbar. Erfindungsgemäss kann eine gleichartige Kalotte vorgesehen sein, die jedoch neu gegenüber dem Rotor des Antriebsmotors 3 drehentkoppelt abgestützt ist, d.h. dass diese nicht automatisch mit dem Rotor umläuft. Bei Berührung mit dem Erdboden, bzw. dem abzuschneidenden Gras stünde eine solche Konsole 11 erfindungsgemäss in der Regel still.

Zum Führen des Gerätes ist oben am Gehäuse 1 ein Holm 12 angeordnet, der an seinem freien, nicht dargestellten Ende mit einem Handgriff versehen ist.

Im unteren Bereich des in den Fig. 2 bis 6 dargestellten Gehäuses 1 ist unmittelbar unter der Schneideinrichtung ein Luftleitblech 13 angeordnet. Das Luftleitblech 13 ist kegelstumpfmantelförmig ausgebildet. Mit seinem inneren Rand überragt das Luftleitblech 13 die Innenwandung des Gehäuses 1 radial nach innen. Somit wird ein Zurückströmen des Saugluftstromes verhindert und dadurch die Saugwirkung des Gerätes verbessert. Weil das Blech gegenüber dem Aufbau nach DE-U-29913423 näher beim Ventilatormesser liegt, ist auch die Sicherheit verbessert und die Blasleistung im Fall einer Drehrichtungsumkehr erhöht.

Bei den in den Fig. 2 bis 6 dargestellten Ausführungen ist am unteren Ende des Gehäuses 1 eine, die Vorschneideinrichtung 5 teilweise umgebende, das Wegschleudern von Gras, Steinen oder anderen festen Gegenständen verhindernde Schürze 15 angeordnet.

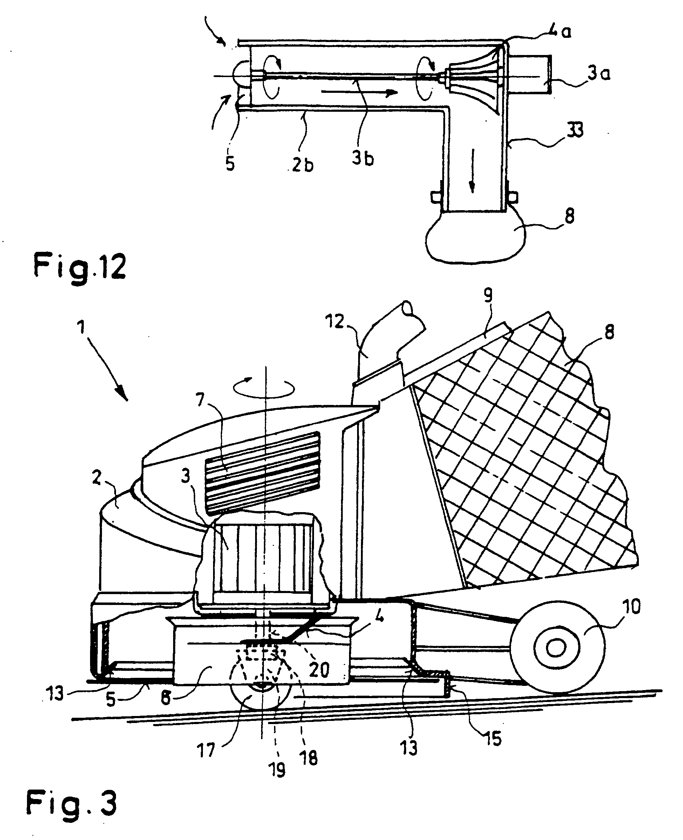

Bei der in Fig. 3 dargestellten Ausführung ist anstelle einer Konsole 11 gemäss dem Aufbau des DE-U-29913423 eine Rolle oder Walze 17 für das Abstützen des Gerätes vorgesehen. Die Walze 17 ist über ein Lager 18 und einen Gabelkopf 19 drehentkoppelt auf der Welle 20 des Antriebsmotors 3 gelagert.

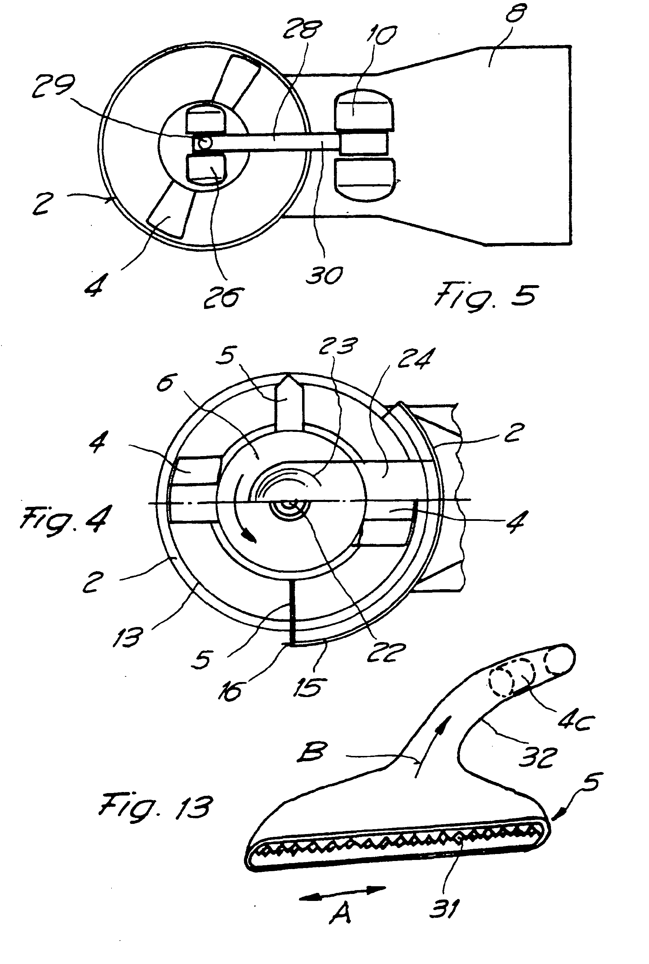

Bei der in Fig. 2 und 4 dargestellten Ausführung erfolgt die Abstützung des Gerätes über eine - beispielsweise aus Kunststoff bestehende - Pfanne 21, eine darin gelagerte Kugel 22 und eine Kufe 23. Die Kufe 23 ist wenigstens an einer Stelle über Stege 24 mit dem Rand des Gehäuses 1 verbunden. Somit können Kräfte vom Gehäuse 1 über die Stege 24 auf die Kufe 23 übertragen werden. Die Lastaufnahme des Gerätegewichts des erfolgt jedoch hauptsächlich über die Welle 20, die Pfanne 21, die Kugel 22 und die Kufe 23.

Aus der in Fig. 4 gezeigten Ansicht des Gerätes gemäss Fig. 2 von unten ist weiters das Gehäuse 1 mit dem Grasführungskanal 2, der Schneideinrichtung 4 und der entgegen der Saug-Strömungsrichtung davor angeordneten Vorschneideinrichtung 5 ersichtlich.

Die Vorschneideinrichtung 5 kann beispielsweise aus einem oder mehreren wegklappbaren oder elastisch verformbaren Messern oder einem abbrechbaren Faden oder stückweise abbrechbarem Kunststoff bestehen. Das Messer oder der Faden sind vorzugsweise am Umfang des Tragkörpers 6 angeordnet. Im Innern des Gehäuses 1 ist das die Vorschneideinrichtung 5 über ihren gesamten Umfang umgebende Luftleitblech 13 ersichtlich. Wie aus dieser Ansicht gemäss Fig. 4 deutlich ersichtlich ist, umgibt die das Wegschleudern von Gegenständen verhindernde Schürze 15 die Vorschneideinrichtung 5 nur über einen Teil ihres Umfanges. Das eine Ende der Schürze 15 ist gegebenenfalls mit einer Schneidkande 16 versehen, welche bei einem Mähfaden das überstehende Ende automatisch abtrennt.

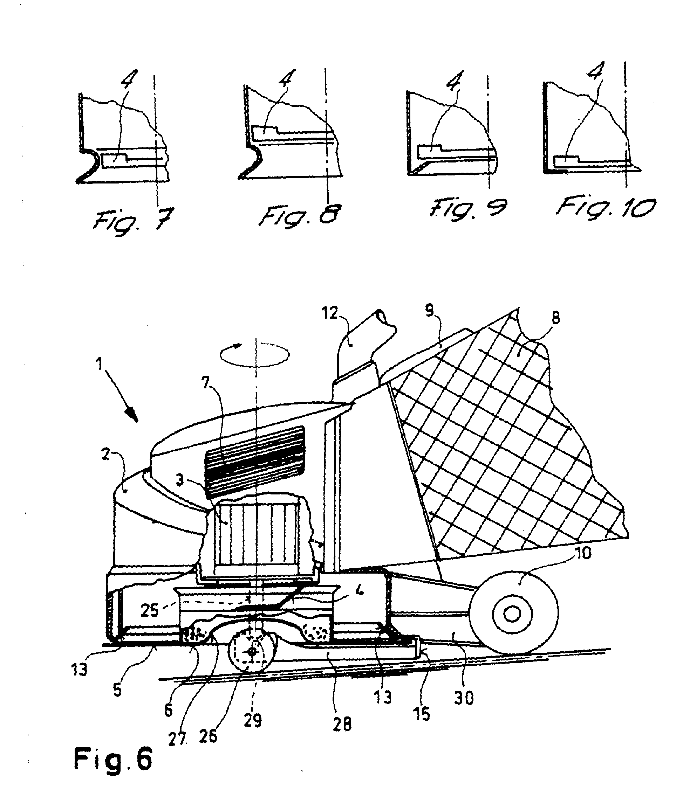

Bei dem in Fig. 5 und 6 dargestellten Gerät ist eine Führungsrolle 26 auf der Motorwelle 25 abgestützt. Der Tragkörper 5 weist an seiner Unterseite eine Ausnehmung 27 für die Führungsrolle 26 auf. Eine seitliche Abstützung der Führungsrolle 26 kann auch über einen oder mehrere Hilfsstege 28 erfolgen. Für die Drehentkoppelung der Führungsrolle 26 von der Motorwelle 25 ist ein beispielsweise als Kugelpfanne 29 ausgebildetes Lager vorgesehen. Die Laufrolle 10 ist über eine Traverse 30 dem Gehäuse 1 verbunden und wird vorzugsweise über einen Riemen durch den Antriebsmotor 3 angetrieben.

In den neuartigen Ausführungsbeispielen gemäss den Figuren 7 und 8 ist die Querschnittsverjüngung strömungstechnisch günstig wie eine Venturidüse ausgebildet. Die beiden Varianten unterscheiden sich allein dadurch, dass sich bei der in Fig. 7 dargestellten Ausführung die engste Stelle der Querschnittsverjüngung am Umfang der Schneideinrichtung 4 befindet, während die engste Stelle bei der in Fig. 8 dargestellten Ausführung entgegen der Saug-Strömungsrichtung vorgelagert ist.

Auch in den aus Fig. 9 und 10 ersichtlichen Ausführungen ist die Querschnittsverjüngung der Schneideinrichtung 4 unmittelbar vorgelagert. Die beiden Ausführungen unterscheiden sich durch den Anstellwinkel der die Querschnittsverjüngung bildenden Fläche.

Die aus den Fig. 7 bis 10 ersichtliche Querschnittsverjüngung kann beispielsweise durch ein separates, mit dem Gehäuse verbundenes, vorzugsweise aus Blech bestehendes Bauteil ausgebildet werden. Eine weitere vorteilhafte Ausführung besteht darin, dass die Querschnittsverjüngung durch das Gehäuse selbst gebildet wird.

In den Fig. 11 und 12 sind zwei weitere, symbolisch als Handgeräte dargestellte Varianten ersichtlich. Sie sind ähnlich den bekannten Laubsauge- bzw. -blasegeräten.
Das aus Fig. 11 ersichtliche Gerät weist an den Enden eines im wesentlichen zylindrischen Grasführungskanals 2a eine Schneideinrichtung 4a und eine Vorschneideinrichtung 5 auf.

Im Unterschied zu den in Fig. 2 bis 6 gezeigten Geräten weisen die Schneideinrichtung 4 und die Vorschneideinrichtung 5 jedoch separate Antriebsmotoren 3, 3a auf. Somit können diese bezüglich den Drehzahlen und Drehmomenten optimal den Anforderungen angepasst werden. Das von der Vorschneideinrichtung 5 abgeschnittene und in der Schneideinrichtung 4a zerkleinerte Gras wird durch die Luftströmung in Grasfangsack 8 befördert und dort aufgenommen. Die Schneideinrichtung 4 kann auch als reines Gebläse ohne Schneidwirkung ausgebildet werden. In diesem Fall wäre es auch mit Vorteil als Laubsaugegerät einsetzbar.

Bei der aus Fig. 12 ersichtlichen Ausführung ist die Schneideinrichtung 4b als Radiallüfter ausgebildet und hat ebenfalls keine Schneidfunktion. Die Vorschneideinrichtung 5 am vorderen Ende des Grasführungskanals 2b wird über eine Torsionswelle 3b, die mit der Schneideinrichtung 4b, bzw. mit dem Antriebsmotor 3a verbunden ist, angetrieben. Die Torsionswelle 3b selbst oder die Verbindungsstellen mit der Schneideinrichtung 4a, bzw. der Vorschneideinrichtung 5 können eine Solltrennstelle aufweisen, welche beim Blockieren einen Folgeschaden des Motors 3a oder die Verletzung einer Person verhindert. Bei der aus Fig. 13 ersichtlichen Ausführung ist die Vorschneideeinrichtung als in Richtung des Doppelpfeiles "A" oszillierender Mähbalkens 31 ausgebildet. Ein solches Gerät wird beispielsweise zum schneiden von Hecken und dgl. eingesetzt. Das durch dem Mähbalken 31 abgeschnittene Mähgut wird mittels einer als Gebläse wirkenden Schneideinrichtung 4c in Richtung des Pfeiles "B" durch einen Kanal 32 herausbefördert.

Die Fig. 1 ist im Unterschied zu den bisher angegebenen Figuren mit einer Graszuführvorrichtung dargestellt. Ein Zuführfinger 37 (einzeln, doppelt -wie dargestellt- oder mehrfach) rotiert entgegen der Rotationsrichtung der Ventilatormesser 4 und führt, da er geringfügig über den Rand des Gehäuses 2a ragt, Gras in den Schneidbereich zu. Dieser Aufbau hat den Vorteil, dass er mit einer geringeren Saugleistung der Ventilatormesser auskommt und trotzdem - auch hohes, eher steifes Gras in den Schneidbereich bringt. Der Zuführfinger 37 dreht mit geringerer Drehzahl als das Ventilatormesser 4. Bevorzugt ist der Zuführfinger über ein Planetengetriebe 38, das mittels Zahnrädern, Reibrädern oder dgl. aufgebaut ist, direkt von der Motorwelle 20 angetrieben. Es entfällt somit ein eigener Antrieb. Die Zuführfinger 37 können freifliegend gelagert sein, d.h. sie beginnen ihre Dreharbeit erst im Kontakt mit einem gewissen Widerstand (Gras, Erdboden oder dgl.) währendem sie sonst mitsamt des Getriebes mit dem umlaufenden Ventilatormesser rotieren. Alternativ sind die Zuführfinger 37 nicht freifliegend, sondern am Gehäuse gelagert. Dies könnte beispielsweise bei einer Konstruktion gemäss den Fig. 2 bis 6 ausgebildet sein, wo gehäusefeste Teile bis unter den drehenden Bereich ragen.

Zur Verbesserung des Zuführeffektes von Gras sind an der Wandung des Gehäuses 2a Positionierzinken 39 vorgesehen, die das Entlanggleiten von Grashalmen am Gehäuse 2a verhindern und so zu einem gewissen Bündelungseffekt führen, der das Abholen der Grashalme durch den Zuführfinger erleichtert.

Der Zuführfinger ist so gekrümmt, dass Grashalme in Richtung Rotationszentrum geführt werden.

Der besondere Aufbau gemäss Fig. 14 basiert auf einem Grundaufbau nach einem der vorhergehenden Figuren, wobei der Ausgang des Gehäuses 2 mit einem Transportrohr 33a verbunden ist und eine Ausblasklappe 34 vorgesehen ist, die über einen Umleghebel 35 oder dgl. (beispielsweise auch über einen Bowdenzug) bedienbar ist und das absperren des Transportrohres 33a bei gleichzeitiger Öffnung des Gehäuseausganges 2 nach aussen bewirkt. Bei Bedarf kann der Anwender somit das aufgesaugte Gras, Laub oder dgl. direkt ins Freie blasen (Pfeile). Bei dem Aufbau nach Fig. 14 ist ausserdem alternativ zu den übrigen Ausführungsbeispielen ein Motorsensenmotor und ein Tragrohr 36 vorgesehen, das wie bei einer Motorsense, den Schneidkopf und den Motor miteinander statisch verbindet. Im Inneren des Tragrohres 36 läuft eine Welle für den Antrieb der Schneideinrichtung. Am hinteren Ende des Tragrohres 36 befindet sich ein Fangsack 8a, in den das Transportrohr 33a fördert. Die Pfeile vor dem Gehäuse 2 deuten die Saugrichtung des Rasentrimmers an. Bei der Verwendung von einem Schneidfaden und einem Ventilatormesser können die gemäss einer Weiterbildung der Erfindung ebenso wie die Zuführfinger 37 gegenläufig ausgebildet sein, was die Schnittleistung gegebenenfalls erhöht.

Eine vom obigen unabhängige Weiterentwicklung für Rasentrimmer mit Ventilatorschneidblättern ist im Anspruch 26 angegeben. Diese ermöglicht den universellen Einsatz eines Saugtrimmers ohne Drehrichtungsumkehr des Antriebes; bzw. sogar eine reine Schneidfunktion ohne Saug oder Blaswirkung (beim Flachstand). Eine solche Verstellung kann gegebenenfalls von unten durch Hebel, Stifte, Getriebe, oder von oben ferngesteuert durch Mechanik oder Elektromotorik erfolgen.

### Bezugszeichenliste

- 1: Gehäuse
- 2, 2a: Grasführungskanal
- 3, 3b, 3c: Antriebsmotor
- 4, 4a, 4b, 4c: Schneideinrichtung
- 5: Vorschneideinrichtung
- 6: Tragkörper
- 7: Lüftungsschlitze
- 8, 8a: Grasfangsack
- 9: Klappe
- 10: Laufrolle
- 11: Konsole
- 12: Holm
- 13: Luftleitblech
- 14: Stützrad
- 15: Schürze
- 16: Schneidkante
- 17: Walze
- 18: Lager
- 19: Gabelkopf
- 20: Welle
- 21: Pfanne
- 22: Kugel
- 23: Kufe
- 24: Steg
- 25: Motorwelle
- 26: Führungsrolle
- 27: Ausnehmung
- 28: Hilfssteg
- 29: Kugelpfanne
- 30: Traverse
- 31: Mähbalken
- 32: Kanal
- 33, 33a: Ausblasrohr (Transportrohr)
- 34: Ausblasklappe
- 35: Umleghebel
- 36: Tragrohr
- 37: Zuführfinger
- 38: Planetengetriebe (Reibräder)
- 39: Positionierzinken

## Patentansprüche

1. Rasentrimmer mit einem Gehäuse (1), wenigstens einem Antriebsmotor (3) und mit einer mit dessen Rotorwelle (22) verbundenen Schneideinrichtung(4), wobei die Schneideinrichtung (4) wenigstens ein an einem Rotor angeordnetes Schneidmesser aufweist, das gleichzeitig auch eine Saugwirkung erzielt, wobei das Gehäuse (1) den Rotor an seinem Umfang umgibt und entgegen der Saug-Strömungsrichtung daran anschliessend eine Ansaugöffnung mit einer Querschnittsverjüngung aufweist, **dadurch gekennzeichnet, dass** die Querschnittsverjüngung in Saug-Strömungsrichtung als im wesentlichen kegelstumpfförmiges Luftleitblech (13) ausgebildet und neben der Schneideinrichtung (4) oder unmittelbar davor angeordnet ist.

2. Rasentrimmer nach Anspruch 1, **dadurch gekennzeichnet, dass** der Schneideinrichtung (4) entgegen der Strömungsrichtung eine Vorschneideinrichtung (5) vorgelagert ist.

3. Rasentrimmer nach einem der Ansprüche 1 oder 2, **dadurch gekennzeichnet, dass** der Rasentrimmer eine, auf der Rotorwelle axial abgestützte, von der Drehbewegung des Rotors entkoppelte, das Gerät in konstantem Abstand vom Boden haltende Abstützvorrichtung aufweist.

4. Rasentrimmer nach Anspruch 2, **dadurch gekennzeichnet, dass** unterhalb der Schneideinrichtung (4), bzw. unterhalb der Vorschneideinrichtung (5) eine mit dem Gehäuse (1) verbundene Abstützvorrichtung vorgesehen ist.

5. Rasentrimmer nach einem der Ansprüche 1 bis 4, **dadurch gekennzeichnet, dass** die Schneideinrichtung (4) durch ein Luftschaufelrad (4a) ohne Schneidfunktion ersetzt ist.

6. Rasentrimmer nach einem der Ansprüche 1 bis 5, **dadurch gekennzeichnet, dass,** Luftleitblech (13) kegelstumpfförmiggebildet ist.

7. Rasentrimmer nach einem der Ansprüche 1 oder 6, **dadurch gekennzeichnet, dass** das Luftleitblech (13) die Innenseite des Gehäuses nach aussen radial überragt.

8. Rasentrimmer nach einem der Ansprüche 2 bis 7, **dadurch gekennzeichnet, dass** der Schneideinrichtung (4) oder der Vorschneideinrichtung (5) eine Zuführeinrichtung (37) vorgelagert ist.

9. Rasentrimmer nach Anspruch 8, **dadurch gekennzeichnet, dass** die Zuführeinrichtung (37) entgegen der Drehrichtung der Schneideinrichtung (4) rotierbar ist und mit dieser vorzugsweise über ein Untersetzungsgetriebe (38) verbunden ist, das gegebenenfalls als Planetengetriebe ausgebildet ist.

10. Rasentrimmer nach einem der vorhergehenden Ansprüche, **dadurch gekennzeichnet, dass** der Bereich der Querschnittsverjüngung und/oder der Eintrittsbereich des Gehäuses (1) im wesentlichen venturidüsenartig ausgebildet ist.

11. Rasentrimmer nach einem der vorhergehenden Ansprüche, **dadurch gekennzeichnet, dass** der untere Rand des Gehäuses (1) im Bereich der Ansaugöffnung radial nach innen gezogen ist.

12. Rasentrimmer nach einem der Ansprüche 2 bis 11, **dadurch gekennzeichnet, dass** die Vorschneideinrichtung (5) wenigstens einen, an sich bekannten Trimmerfaden, wegklappbaren Schneidmesser, ggf. vorgebogene - bei stillstehendem Antriebsmotor vorzugsweise entgegen der Strömungsrichtung gerichtete - Metalldrähte, oder aus elastisch verformbarem, bzw. abbrechbarem Kunststoff bestehende Flügel aufweist.

13. Rasentrimmer nach einem der vorhergehenden Ansprüche, **dadurch gekennzeichnet, dass** die Abstützvorrichtung als Kufe (23) ausgebildet ist.

14. Rasentrimmer nach einem der vorhergehenden Ansprüche, **dadurch gekennzeichnet, dass** die Abstützvorrichtung als Rolle, bzw. als Walze (26) ausgebildet ist.

15. Rasentrimmer nach einem der vorhergehenden Ansprüche, **dadurch gekennzeichnet, dass** die Drehentkoppelung der Abstützvorrichtung über ein Gleit- oder Wälzlager oder über eine Kugel (22)erfolgt.

16. Rasentrimmer nach einem der vorhergehenden Ansprüche, **dadurch gekennzeichnet, dass** das der lichte Querschnitt des - die Schneideinrichtung (4) entgegen der Saug-Strömungsrichtung axial überragenden Gehäusebereiches - sich entgegen der Strömungsrichtung erweiternd ausgebildet ist.

17. Rasentrimmer nach einem der vorhergehenden Ansprüche, **dadurch gekennzeichnet, dass** zwischen dem Ausgang des Gehäuses (2) und einem Transportrohr (33a) für das Ausblasgut, oder im Transportrohr (33a) eine Ausblasklappe (34) vorgesehen ist, die wahlweise die Förderung ins Transportrohr (33a) oder ins Freie ermöglicht.

18. Rasentrimmer nach Anspruch 5, **dadurch gekennzeichnet, dass** das Luftschaufelrad als Axialgebläse (4a) oder als Radialgebläse (4b) ausgebildet ist und vorzugsweise in ein Ausblasrohr (33) fördert, wobei dieses gegebenenfalls verstellbar ist, um in verschiedene Richtungen - z.B. auch gegen die Fahrtrichtung - zu blasen.

19. Rasentrimmer nach einem der Ansprüche 1 bis 18, **dadurch gekennzeichnet, dass** die Drehrichtung des Antriebsmotors (3) und somit auch die Saug-Strömungsrichtung im Innern des Gerätes zur Blas-Strömungsrichtung umkehrbar ist.

20. Rasentrimmer nach einem der Ansprüche 2-19, **dadurch gekennzeichnet, dass** die Schneideinrichtung (4) und die Vorschneideinrichtung(5) miteinander lösbar verbunden sind und/oder dass der Drehantrieb der Schneideinrichtung (4) und der Vorschneideinrichtung (5) voneinander getrennt oder über eine bei Überschreiten eines vorbestimmten Solldrehmomentes lösbare Drehmitnahmeverbindung erfolgt.

21. Rasentrimmer nach Anspruch 20, **dadurch gekennzeichnet, dass** die Vorschneideinrichtung (5) vollständig von der Schneideinrichtung (4) demontierbar und die Schneideinrichtung (4) auch ohne Vorschneideinrichtung (5), jedoch gegebenenfalls mit Zuführeinrichtung (37), betreibbar ist.

22. Rasentrimmer nach einem der Ansprüche 2 bis 21, **dadurch gekennzeichnet, dass** die Vorschneideinrichtung (5) als oszillierender Mähbalken (31) ausgebildet ist.

23. Rasentrimmer nach einem der vorhergehenden Ansprüche, **dadurch gekennzeichnet, dass** der Antrieb des Gerätes nach Art einer sog. Motorsense über eine flexible Welle, von einem entfernt gelagerten Motor, erfolgt.

24. Rasentrimmer nach einem der vorhergehenden Ansprüche, **dadurch gekennzeichnet, dass** der Antriebsmotor als Elektro- oder als Verbrennungsmotor ausgebildet ist.

25. Rasentrimmer nach einem der vorhergehenden Ansprüche, **dadurch gekennzeichnet, dass** an seinem Gehäuse periphere Positionierzinken (39) angeordnet sind, die das Gras am Entlanggleiten am Gehäuse (1) hindern.

26. Rasentrimmer nach einem der vorhergehenden Ansprüche, **dadurch gekennzeichnet, dass** die Schneideinrichtung als Ventilatorschneidblatt ausgebildet ist und die Ventilatorschaufeln über ihre Erstreckungsachse verstellbar sind, so dass bei gleicher Drehrichtung gesaugt oder geblasen werden kann, wobei vorzugsweise die Verstellung über Hebel, Stiften, Getriebe von unten und/oder von oben ferngesteuert mechanisch oder elektromechanisch bewirkbar ist.

## Claims

1. Lawn trimmer having a housing (1), at least one drive motor (3) and a cutting device (12) connected to the rotor shaft (22) thereof, the cutting device (4) having at least one cutting blade which is arranged on a rotor and also simultaneously achieves a suction effect, the housing (1) surrounding the rotor at its circumference and having, connected thereto, an intake orifice with a tapering cross-section in a direction opposite to the suction flow direction, **characterized in that** the tapering cross-section is formed in the suction flow direction as an air deflector plate (13) having substantially the shape of a truncated cone and is arranged next to the cutting device (4) or immediately before it.

2. Lawn trimmer according to Claim 1, **characterized in that** the cutting device (4) is mounted before a precutting device (5) in a direction opposite to the flow direction.

3. Lawn trimmer according to either of Claims 1 and 2, **characterized in that** the lawn trimmer has a support device supported axially on the rotor shaft, decoupled from the rotational movement of the rotor and keeping the device at a constant distance from the ground.

4. Lawn trimmer according to Claim 2, **characterized in that** a support device connected to the housing (1) is provided below the cutting device (4) or below the precutting device (5).

5. Lawn trimmer according to any of Claims 1 to 4, **characterized in that** the cutting device (4) is replaced by an air impeller (4a) without a cutting function.

6. Lawn trimmer according to any of Claims 1 to 5, **characterized in that** the air deflector plate (13) has the shape of a truncated cone.

7. Lawn trimmer according to any of Claims 1 to 6, **characterized in that** the air deflector plate (13) projects radially outwards from the inside of the housing.

8. Lawn trimmer according to any of Claims 2 to 7, **characterized in that** the cutting device (4) or the precutting device (5) is mounted upstream of a feed device (37).

9. Lawn trimmer according to Claim 8, **characterized in that** the feed device (37) is rotatable in the direction opposite to the direction of rotation of the cutting device (4) and is connected to said cutting device preferably via a step-down gear (38) which is optionally in the form of a planetary gear.

10. Lawn trimmer according to any of the preceding Claims, **characterized in that** the region of the tapering cross-section and/or the entry region of the housing (1) is substantially in the form of a venturi nozzle.

11. Lawn trimmer according to any of the preceding Claims, **characterized in that** the lower edge of the housing (1) is drawn radially inwards in the region of the intake orifice.

12. Lawn trimmer according to any of Claims 2 to 11, **characterized in that** the precutting device (5) has at least one trimmer cord known per se, a cutting blade which can be folded away, optionally pre-bent metal wire - preferably directed opposite to the flow direction when the drive motor is stationary - or wings consisting of plastic which is elastically deformable or can be broken off.

13. Lawn trimmer according to any of the preceding Claims, **characterized in that** the support device is in the form of a rocker (23).

14. Lawn trimmer according to any of the preceding Claims, **characterized in that** the support device is in the form of a roller or in the form of a roll (26).

15. Lawn trimmer according to any of the preceding Claims, **characterized in that** the rotational decoupling of the support device is effected by means of a sliding bearing or roller bearing or by means of a ball (22).

16. Lawn trimmer according to any of the preceding Claims, **characterized in that** the internal cross-section of the housing region - projecting axially beyond the cutting device (4) in the direction opposite to the suction flow direction - widens in a direction opposite to the flow direction.

17. Lawn trimmer according to any of the preceding Claims, **characterized in that** a blow-out flap (34) which alternatively permits transport into the transport pipe (33a) or into the open air is provided between the exit of the housing (2) and a transport pipe (33a) for the material blown out, or in the transport pipe (33a).

18. Lawn trimmer according to Claim 5, **characterized in that** the air impeller is in the form of an axial fan (4a) or in the form of a radial fan (4b) and preferably transports into a blow-out pipe (33), this optionally being adjustable in order to blow in different directions - for example also in a direction opposite to the direction of travel.

19. Lawn trimmer according to any of Claims 1 to 18, **characterized in that** the direction of rotation of the drive motor (3) and hence also the suction flow direction in the interior of the device can be reversed relative to the direction of the blown stream.

20. Lawn trimmer according to any of Claims 2 to 19, **characterized in that** the cutting device (4) and the precutting device (5) are detachably connected to one another and/or **in that** the rotational driving of the cutting device (4) and of the precutting device (5) are effected separately from one another or by means of a rotary driver connection which is detachable on exceeding a predetermined specified torque.

21. Lawn trimmer according to Claim 20, **characterized in that** the precutting device (5) can be completely removed from the cutting device (4), and the cutting device (4) can also be operated without the precutting device (5), but optionally with feed device (37).

22. Lawn trimmer according to any of Claims 2 to 21, **characterized in that** the precutting device (5) is in the form of an oscillating mowing bar (31).

23. Lawn trimmer according to any of the preceding Claims, **characterized in that** the device is driven in the manner of a so-called motor scythe via a flexible shaft, by a remotely mounted motor.

24. Lawn trimmer according to any of the preceding Claims, **characterized in that** the drive motor is in the form of an electric motor or in the form of an internal combustion engine.

25. Lawn trimmer according to any of the preceding Claims, **characterized in that** peripheral positioning prongs (39) which prevent grass from sliding along the housing (1) are arranged on the housing of said lawn trimmer.

26. Lawn trimmer according to any of the preceding Claims, **characterized in that** the cutting device is in the form of a fan cutting blade, and the fan blades are adjustable over their axis so that sucking and blowing can be effected in the same direction of rotation, the adjustment preferably being capable of being effected by means of levers, pins or gears, from below and/or from above, mechanically or electromechanically under remote control.

## Revendications

1. Débroussailleuse comprenant un boîtier (1), au moins un moteur d'entraînement (3) et un dispositif à couper (4) relié à l'arbre de rotor (22) de celui-ci, ledit dispositif à couper (4) comprenant au moins un couteau, qui est disposé à un rotor et, en même temps, réalise un effet d'aspiration, dans lequel le boîtier (1) entoure le rotor à sa périphérie et comprend, en se joignant contre le sens d'écoulement, une ouverture d'aspiration ayant une section réduite, **caractérisée en ce, que** la section réduite en sens d'écoulement d'aspiration est formé comme une tôle de conduite d'air (13) essentiellement tronconique, et est disposé à côté du dispositif à couper (4) ou immédiatement devant celui-ci.

2. Débroussailleuse selon la revendication 1, **caractérisée en ce, qu'**un dispositif à couper préparatoire (5) est disposé, vue contre le sens d'écoulement, devant le dispositif à couper (4).

3. Débroussailleuse selon la revendication 1 ou 2, **caractérisée en ce, que** la débroussailleuse comprend un dispositif d'appui, qui est supporté axialement à l'arbre du rotor, est découplé du mouvement rotatoire du rotor et maintien l'appareil à une distance constante du sol.

4. Débroussailleuse selon la revendication 2, **caractérisée en ce, qu'**un dispositif d'appui relié au boîtier (1) est prévu au dessous du dispositif à couper (4) ou au dessous du dispositif à couper préparatoire (5).

5. Débroussailleuse selon une quelconque des revendications 1 à 4, **caractérisée en ce, que** le dispositif à couper (4) est remplacé par un roue à aubes d'air (4a) sans une fonction de coupage.

6. Débroussailleuse selon une quelconque des revendications 1 à 5, **caractérisée en ce, que** la tôle de conduite d'air (13) a une forme tronconique.

7. Débroussailleuse selon une quelconque des revendications 1 à 6, **caractérisée en ce, que** la tôle de conduite d'air (13) dépasse radialement le côté intérieur du boîtier vers l'extérieur.

8. Débroussailleuse selon une quelconque des revendications 2 à 7, **caractérisée en ce, qu'**un dispositif d'alimentation (37) est disposé devant le dispositif à couper (4) ou devant le dispositif à couper préparatoire (5).

9. Débroussailleuse selon la revendication 8, **caractérisée en ce, que** le dispositif d'alimentation (37) peut être tourné contre la direction de mouvement rotatoire du dispositif à couper (4) et, de préférence, est relié à ceci par un démultiplicateur (38), qui, le cas échéant, est formé comme un engrenage planétaire.

10. Débroussailleuse selon une quelconque des revendications précédentes, **caractérisée en ce, que** la zone de la section réduite et/ou la zone d'entrée du boîtier (1) est essentiellement en forme d'un tube de Venturi.

11. Débroussailleuse selon une quelconque des revendications précédentes, **caractérisée en ce, que** le bord inférieur du boîtier (1) est radialement tiré vers l'intérieur dans la zone de l'ouverture d'aspiration.

12. Débroussailleuse selon une quelconque des revendications 2 à 11, **caractérisée en ce, que** le dispositif à couper préparatoire (5) comprend au moins un fil à débroussailler, connu en soi, des couteaux escamotables, le cas échéant des fils métalliques pliés en avant, et de préférence dirigés contre le sens d'écoulement quand le moteur d'entraînement est arrêté, ou des ailes en matière plastique élastiquement déformable ou capable d'être cassée.

13. Débroussailleuse selon une quelconque des revendications précédentes, **caractérisée en ce, que** le dispositif d'appui est formé comme un barre (23).

14. Débroussailleuse selon une quelconque des revendications précédentes, **caractérisée en ce, que** le dispositif d'appui est formé comme un rouleau ou comme un cylindre (26).

15. Débroussailleuse selon une quelconque des revendications précédentes, **caractérisée en ce, que** le découplage de rotation du dispositif d'appui est réalisé par un palier, soit à glissement, soit à roulement, ou par une boule (22).

16. Débroussailleuse selon une quelconque des revendications précédentes, **caractérisée en ce, que** la dimension intérieure de la zone de boîtier, qui dépasse axialement le dispositif à couper (4) contre le sens d'écoulement d'aspiration, s'élargit contre le sens d'écoulement.

17. Débroussailleuse selon une quelconque des revendications précédentes, **caractérisée en ce, qu'**entre la sortie du boîtier (2) et un tuyau de transport (33a) pour le matériau échappant ou dans le tuyau de transport (33a) une trappe d'échappement (34) est prévue, qui rend possible le transport sélectivement dans le tuyau de transport (33a) ou au plein air.

18. Débroussailleuse selon la revendication 5, **caractérisée en ce, que** le roue à aubes d'air est formé comme une soufflante axiale (4a) ou comme soufflante radiale (4b) et convoie, de préférence, dans un tuyau d'échappement (33), qui, le cas échéant, est déplaçable pour souffler dans des directions différentes, par exemple même contre la direction de marche.

19. Débroussailleuse selon une quelconque des revendications 1 à 18, **caractérisée en ce, que** la direction de rotation du moteur d'entraînement (3), et donc le sens d'écoulement d'aspiration à l'intérieur de l'appareil, peut être renversée par rapport au sens d'écoulement de soufflage.

20. Débroussailleuse selon une quelconque des revendications 2 à 19, **caractérisée en ce, que** le dispositif à couper (4) et le dispositif à couper préparatoire (5) sont reliés l'un à l'autre d'une manière détachable et/ou que les entraînements en rotation du dispositif à couper (4) et du dispositif à couper préparatoire (5) sont séparés l'un de l'autre, ou que l'entraînement est réalisé par une connexion entraîneuse, mobile en cas d'un dépassement d'un moment d'un couple prescrite prédéterminé.

21. Débroussailleuse selon la revendication 20, **caractérisée en ce, que** le dispositif à couper préparatoire (5) est complètement démontable du dispositif à couper (4), et que le dispositif à couper (4) peut être actionné même sans le dispositif à couper préparatoire (5), mais le cas échéant avec un dispositif d'alimentation (37).

22. Débroussailleuse selon une quelconque des revendications 2 à 21, **caractérisée en ce, que** le dispositif à couper préparatoire (5) est formé comme un barre de coupe oscillant (31).

23. Débroussailleuse selon une quelconque des revendications précédentes, **caractérisée en ce, que** l'entraînement de l'appareil est réalisé selon le type dit faux motorisée par un arbre flexible et d'un moteur logé loin.

24. Débroussailleuse selon une quelconque des revendications précédentes, **caractérisée en ce, que** le moteur d'entraînement est formé comme un moteur électrique ou un moteur à combustion interne.

25. Débroussailleuse selon une quelconque des revendications précédentes, **caractérisée en ce, que** des pointes de positionnement périphériques (39) sont disposé à son boîtier, qui empêchent le glissement des herbes le long du boîtier (1).

26. Débroussailleuse selon une quelconque des revendications précédentes, **caractérisée en ce, que** le dispositif à couper est formé comme une pelle de ventilateur à couper, et que les pelles de ventilateur sont ajustable le long de son axe de manière, que l'on peut aspirer ou souffler avec la même direction de rotation, l'ajustage étant effectuée préférablement d'une manière télécommandée par des leviers, des chevilles, des trains de machine d'en bas et/ou d'en haut soit d'une façon mécanique, soit d'une façon électromécanique.
